# EUROPÄISCHE PATENTANMELDUNG

(11) **EP 3 744 406 A1**
(43) Veröffentlichungstag der Anmeldung: **02.12.2020**
(21) Anmeldenummer: 20174288.9
(22) Anmeldetag: 13.05.2020
(51) Int. Cl.: A62C 99/00, B60L 58/24, A62C 3/07, A62C 3/16, B65D 88/12, B65D 88/54, B65D 90/00, B65D 90/22

(54) **BERGUNGSEINRICHTUNG INBESONDERE FÜR BATTERIEBETRIEBENE AUTOMOBILE**

(30) Priorität: 28.05.2019 CH 6912019; 23.12.2019 CH 16972019
(71) Anmelder: Road Help Abschleppdienst, 8134 Adliswil (CH)
(72) Erfinder: Podkubosek, Mirco, 8135 Langnau a.A. (CH)
(74) Vertreter: Keller Schneider Patent- und Markenanwälte AG (Zürich)

(57) **Zusammenfassung**

Bei einer Bergungseinrichtung zum Bergen eines brennenden Automobils, insbesondere Elektroautomobils, umfassend einen mit Löschwasser befüllbaren Container (1) mit einem Containerboden (2) und mehreren Containerwänden (3, 3', 4, 5), die einen Innenraum (6) zur Aufnahme des Automobils ausbilden, wobei eine stirnseitige Containerwand (5) als wasserdicht verschliessbare Tür (5) ausgebildet ist; eine Seilwinde (9), zum Einziehen des Automobils bei offener Tür (5) in den Innenraum (6) des Containers (1); ist es vorgesehen, dass der Container (1) weiter einen eine obere Öffnung des Containers (1) fest verschliessbaren Stahldeckel (7, 7') aufweist und die Seilwinde (9) ausserhalb des Innenraums (6) des Containers (1) angeordnet ist, wobei ein Zugseil (10) der Seilwinde (9) bei offenem Stahldeckel (7,7') über mindestens zwei Umlenkungen (12, 11), insbesondere Umlenkrollen, in den Innenraum (6) des Containers (1) gelenkt ist, so dass das Automobil durch die Türöffnung in den Innenraum (6) des Containers (1) ziehbar ist.

## Beschreibung

### Technisches Gebiet

Die Erfindung betrifft eine Bergungseinrichtung für Automobile, insbesondere Elektroautomobile.

### Technischer Hintergrund

Brennende Elektroautos sind nur schwer zu löschen. Eine Löscheinrichtung für brennende Elektroautos ist unter der Bezeichnung RED BOXX bekannt. Diese umfasst einen Abrollcontainer mit Boden und mehreren Seitenwänden, die einen Innenraum zur Aufnahme des Elektroautos definieren. Eine Stirnwand ist als verschliessbare Klappe ausgebildet und bildet gleichzeitig in der Offenstellung eine Rampe. In der Offenstellung der verschliessbaren Klappe kann das brennende Elektroauto mittels einer an der gegenüberliegenden Stirnwand im Innenraum des Containers angeordneten Seilwinde in den Container eingezogen werden. Um das Elektroauto zu löschen wird der Container bei geschlossener Klappe mit Löschwasser gefüllt.

Nachteilig an dem bekannten Löschcontainer ist, dass er im vollen Zustand nicht transportfähig ist und vor dem Abtransport wieder geleert werden muss. Zur raschen und sicheren Bergung von verunfallten Elektroautos z.B. aus einem Tunnel ist die bekannte Löscheinrichtung nicht geeignet.

### Darstellung der Erfindung

Eine Aufgabe der Erfindung besteht darin, eine Bergungseinrichtung anzugeben, mit welcher verunfallte Elektroautos rasch und sicher geborgen werden können.

Diese Aufgabe wird durch eine Bergungseinrichtung mit den Merkmalen des Anspruch 1 gelöst. Die Bergungseinrichtung zum Bergen eines Automobils, insbesondere Elektroautomobils, umfasst ein Transportfahrzeug und einen mit Löschwasser befüllbaren Container mit einem Containerboden und mehreren Containerwänden, die einen Innenraum zur Aufnahme des Automobils ausbilden. Eine stirnseitige Containerwand ist als wasserdicht verschliessbare Tür ausgebildet. Der Container weist weiter einen aufklappbaren, eine obere Öffnung des Containers fest verschliessbaren Stahldeckel auf.

Beim Bergen eines brennenden Elektroautomobils muss der Container vollständig mit Löschwasser, welches häufig Zusätze oder Additive enthält, geflutet werden. Da sich die Batterien von verunfallten Elektroautos über längere Zeit, d.h. bis zu 48 Stunden lang, immer wieder selbst entzünden können, kann der bekannte Container bis zu Entleerung des Löschwassers nicht bewegt werden. Bei der erfindungsgemässen Bergungseinrichtung stellt sich dieses Problem nicht. Der Containerlässt sich ohne weiteres auch im mit Löschwasser gefüllten Zustand transportieren, weil das durch die Bewegung des Containers herumschwappende Löschwasser vom Containerdeckel effizient zurückgehalten wird, so dass auch bei einer Schrägstellung des gesamten Containers kaum Löschwasser ausfliessen kann. Die Bergungseinrichtung kann entsprechend auch in einem Tunnel verwendet werden, wenn eine rasche Abführung des Automobils erforderlich ist. Sogar eine Ausgestaltung als Abrollcontainer ist möglich, da auch ein gefüllter Container ohne erhebliches Ausfliessen des Löschwassers auf das entsprechende Transportfahrzeug gehoben werden kann.

Der Container ist vorzugsweise bis 2 m Höhe wasserdicht und kann bis zu 27500 Liter Wasser aufnehmen.

In einigen Ausführungsformen kann der Stahldeckel ein- oder zweiteilig ausgebildet sein. In der Regel ist er mit Stockwinden betätigbar. Zur Sicherheit kann der Stahldeckel, welcher ein- oder zweiteilig ausgebildet sein kann, mindestens eine Explosionsklappe aufweisen.

In einigen Ausführungsformen ist zwischen Deckel und oberer Stirnseite des Containers eine umlaufende Dichtung vorhanden. Die Dichtung kann eine elastische Dichtung oder eine labyrinthartige Dichtung sein. Bei einem zweiteiligen Deckel kann zwischen den beiden Deckeln ebenfalls eine Dichtung vorhanden sein.

In einigen Ausführungsformen kann der Deckel eine Leiste aufweisen, welche derart angeordnet ist, dass sie bei geschlossenem Deckel entlang dem oberen Rand des Containers verläuft und mit diesem überlappt, um allfälliges Austreten von herumschwappendem Löschwasser zu reduzieren. Bei einem zweiteiligen Deckel kann ein Deckelteil mit einer Leiste versehen sein, welche bei geschlossenem Deckel mit dem anderen Deckelteil überlappt und den zwischen den Deckelteilen vorhandenen Spalt abdeckt.

In einigen Ausführungsformen kann der Container einen an einer der beiden seitlichen Containerwände eine Aufnahmerahmen für den Deckel aufweisen, welcher schwenkbar mit dem oberen Rand der seitlichen Containerwand verbunden ist und in welchem der Deckel verschiebbar aufgenommen ist. Zum Schliessen des Deckels kann der Aufnahmerahmen in eine horizontale Stellung gebracht werden und der Deckel kann über die obere Containeröffnung geschoben werden. Der Deckel kann anschliessend mittels Verschlüsse am Container befestigt werden. Der leere Deckelaufnahmerahmen wird wieder in die horizontale Lage gebracht.

In einigen Ausführungsformen kann im Innenraum des Containers ein Brandmelder und/oder ein Temperaturfühler angeordnet sein. Beim Bergen und Abtransportieren eines Automobils, welches nicht brennt, kann so der Innenraum auf eine allfällige Entfachung eines Brandes überwacht werden. Der Brandmelder und/oder Temperaturfühler kann dabei einen akkustischen und/oder visuellen Alarm auslösen, z.B. in der Führerkabine des Transportfahrzeugs oder auf einem Smartphone einer die Bergungseinrichtung bedienenden Person. Bei einem Alarm kann die bedienende Person das Transportfahrzeug zur nächsten Löschwasserversorgung resp. zum nächsten Hydranten fahren und den Container mit Löschwasser fluten und/oder die Feuerwehr alarmieren. Weiter kann die Bergungseinrichtung eine Trockenlöschanlage, vorzugsweise eine Aerosollöschanlage, aufweisen, welche bei Auslösung den Innenraum mit Löschfluid flutet. Die Trockenlöschanlage kann manuell und/oder automatisch über den Brandmelder resp. den Temperaturfühler auslösbar sein.

In einigen Ausführungsformen kann die Bergungseinrichtung Mittel zum Einladen des Automobils in den Innenraum des Containers umfassen.

In einigen Ausführungen kann das Mittel zum Einladen ein Zugseil umfassen, welches über mindestens eine bodennahe Umlenkung geführt ist, die im Innenraum an der der Tür gegenüberliegenden Stirnwand in Bodennähe angeordnet ist, so dass das Automobil durch die Türöffnung in den Innenraum des Containers ziehbar ist. Dabei kann das Zugseil mit einem Ende am verunfallten Fahrzeug befestigt, über die mindestens eine bodennahe Umlenkung geführt und mit dem anderen Ende an einem Fahrzeug, z.B. dem Transportfahrzeug befestigt sein. Das Zugseil kann zudem über eine obere Umlenkung geführt sein, die bei offenem Stahldeckel auf der oberen Stirnkante der Stirnwand aufgesetzt ist. Auf diese Weise kann ein Automobil auch von der Frontseite des Containers mit einem geeigneten Fahrzeug oder anderem Zugmittel in den Container gezogen werden.

In einigen Ausführungsformen kann das Mittel zum Einladen eine mit einem Zugseil verbundene Seilwinde umfassen, die ausserhalb des Innenraums des Containers am Container, vorzugsweise an der der Tür gegenüberliegenden Stirnwand des Containers, oder an dem den Container transportierenden Transportfahrzeug befestigt sein. Dabei kommt die Seilwinde in keinem Fall mit Löschwasser, welches Zusätze und/oder Additive enthalten kann, in Kontakt und kann entsprechend nicht durch dieses beschädigt werden.

In einigen Ausführungsformen kann das Mittel zum Einladen eine im Innenraum angeordnete Schiebeplattform umfassen. Die Schiebeplattform kann mittels Hydraulik-, Seil- oder Kettenantriebes aus- resp. einfahrbar ausgebildet sein. So kann ein verunfalltes Automobil zum Einladen in den Container einfach auf eine ausgefahrene Schiebeplattform gesetzt oder geschoben werden. Auf diese Weise ist das Automobil zur Sicherung besser zugänglich und kann später nach der Bergung einfach in ein Zwischenlager oder einen anderen Container transferiert werden. Der Boden der Schiebeplattform kann als Gitterrost ausgestaltet sein.

In einigen Ausführungsformen kann der Container zur einfacheren Befüllung und Entleerung mindestens eine in einer Containerwand angeordnete Einlassöffnung und/oder mindestens eine im unteren Bereich der Seitenwände und/oder der Stirnwand angeordneten verschliessbare Auslassöffnung für das Löschwasser aufweisen. Bevorzugt sind die Ein- und Auslassöffnungen mit einer Storz-Kupplung versehen. Zudem kann der Container im Innenraum eine Sprinkleranlage zur Kühlung eines Automobils aufweisen. Die Sprinkleranlage umfasst vorzugsweise mehrere Rohrleitungen, welche im oberen Bereich der Containerwände und/oder im Bereich des Containerbodens angeordnet sind.

In einigen Ausführungsformen kann die Bergungseinrichtung weiter eine im Türöffnungsbereich des Containers angeordnete oder anbringbare Rampe umfassen.

In einigen Ausführungsformen kann der Container zu Beladung mittels eines Krans zwischen den Seitenwänden eine demontierbare, obere Traverse, insbesondere eine Hecktraverse und eine Mitteltraverse, aufweisen. Die Traverse kann mit einer Spanneinrichtung versehen sein, um ein montieren und demontieren zu erleichtern.

In einigen Ausführungsformen kann der Container als Abrollcontainer ausgebildet sein, welcher zur Beladung mit dem beschädigten oder brennenden Automobil abgesetzt wird. Anschliessend kann der Abrollcontainer auch im mit Löschwasser gefüllten Zustand wieder auf den entsprechenden Lastwagen gezogen werden und das Automobil kann so schnell aus einer allfälligen Gefahrenzone, z.B. aus einem Tunnel entfernt werden.

In einigen Ausführungsformen kann der Container der Bergungseinrichtung auf einem Lastwagen oder einem Lastwagenanhänger montiert sein.

Die Erfindung betrifft weiter ein Verfahren zur Bergung eines verunfallten Automobils mit einer voran beschriebenen Bergungseinrichtung. Das Verfahren umfasst die Schritte: (a) Bereitstellen des Containers; (b) Beladen des Containers mit dem verunfallten Automobil; (c) Abtransport des verunfallten Automobils unmittelbar nach der Beladung.

In einigen Ausführungsformen kann vor dem Abtransport der Container mit Löschwasser geflutet werden.

### Kurze Erläuterung zu den Figuren

Die Erfindung soll nachfolgend anhand von Ausführungsbeispielen im Zusammenhang mit der(n) Zeichnung(en) näher erläutert werden. Es zeigen:
- Fig. 1: eine perspektivische Ansicht auf die Stirnseite eines Abrollcontainers zum Bergen eines Automobils;
- Fig. 2: eine perspektivische Seitenansicht des Abrollcontainers aus Fig. 1;
- Fig. 3: eine perspektivische Detailansicht in einem Innenraum des Abrollcontainers aus Fig. 1;
- Fig. 4: eine perspektivische Ansicht in den Innenraum des Abrollcontainers aus Fig. 1;
- Fig. 5: eine schematische Darstellung eines Containers mit Deckelaufnahmerahmen; und
- Fig. 6: unter (a) bis (d) einen Container mit Schiebeplattform in unterschiedlichen Positionen; und
- Fig. 7: die Schiebeplattform aus Fig. 6 mit Seilzug von unten.

### Wege zur Ausführung der Erfindung

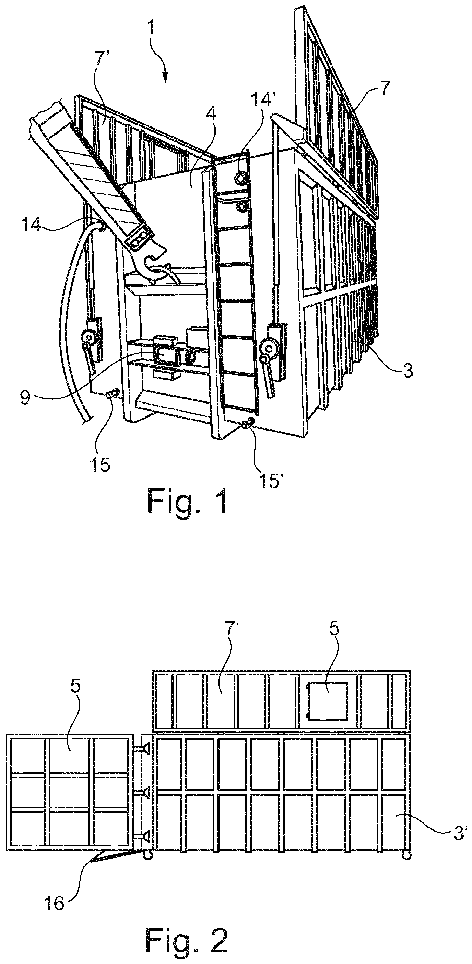

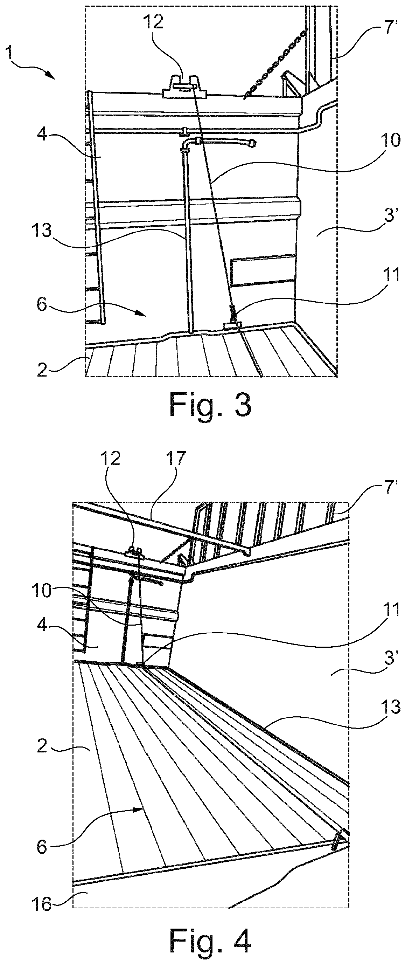

In den Figuren 1 bis 4 sind verschiedene Ansichten eines Containers 1 einer Bergungseinrichtung zum Bergen eines brennenden Automobils, insbesondere Elektroautomobils, in Form eines Abrollcontainers gezeigt.

Der Container 1 weist einen Containerboden 2 und vier Containerwände 3, 3', 4, 5 auf, die zusammen einen wasserdichten Innenraum 6 zur Aufnahme des Automobils ausbilden. Eine der beiden stirnseitigen Containerwände 4, 5 ist als rückseitige, wasserdicht verschliessbare Tür 5 ausgebildet. Weiter ist der Innenraum 6 nach oben mit einem festen Stahldeckel 7, 7' vollständig verschliessbar, so dass herumschwappendes Wasser kaum über den oberen Rand des Containerinnenraums 6 austreten kann. In der gezeigten Ausführungsform ist der Stahldeckel 7, 7' zweiteilig und über die seitlichen Containerwände 3, 3' schwenkbar ausgestaltet. Im Stahldeckel 7, 7' ist eine Explosionsklappe 8 angeordnet.

An der vorderen stirnseitigen Containerwand 4 ist aussen eine Seilwinde 9 mit Zugseil 10 angebracht. Das Zugseil 10 ist über eine erste obere Umlenkrolle 12, die auf den oberen Rand der vorderen stirnseitigen Containerwand 4 aufsetzbar ist, in den Innenraum 6 geführt. Eine zweite Umlenkrolle 11 für das Zugseil 10 ist im Innenraum in Bodennähe innenseitig an der vorderen stirnseitigen Containerwand angeordnet.

Weiter sind im Innenraum 6 Rohrleitungen 13 einer Sprinkelanlage verlegt, welche entlang den seitlichen Wänden 3, 3' im oberen und unteren Bereich geführt sind.

In der vorderen stirnseitigen Wand 4 sind Ein- und Auslassöffnungen 14, 14', 15, 15' für Löschwasser angebracht. Diese können mit einer Storzkupplung versehen sein.

Weiter umfasst der Container 1 eine einklappbare Rampe 16, welche türseitig am Containerboden befestigt ist.

Der Container kann weiter eine Trockenlöschanlage aufweisen, mittels welcher der Innenraum des Containers mit Löschfluid geflutet werden kann. Zur Auslösung des Trockenlöschanlage kann ein Brandmelder und/oder ein Temperaturfühler im Innenraum des Containers angeordnet sein.

Zwischen den Seitenwänden ist eine demontierbare, obere Traverse 17 ausgebildet. Die Traverse verhindert ein nach aussen Drücken der Seitenwände durch das Löschwasser. Zur Beladung des Containers von oben, z.B. mittels eines Krans, kann die Traverse entfernt werden.

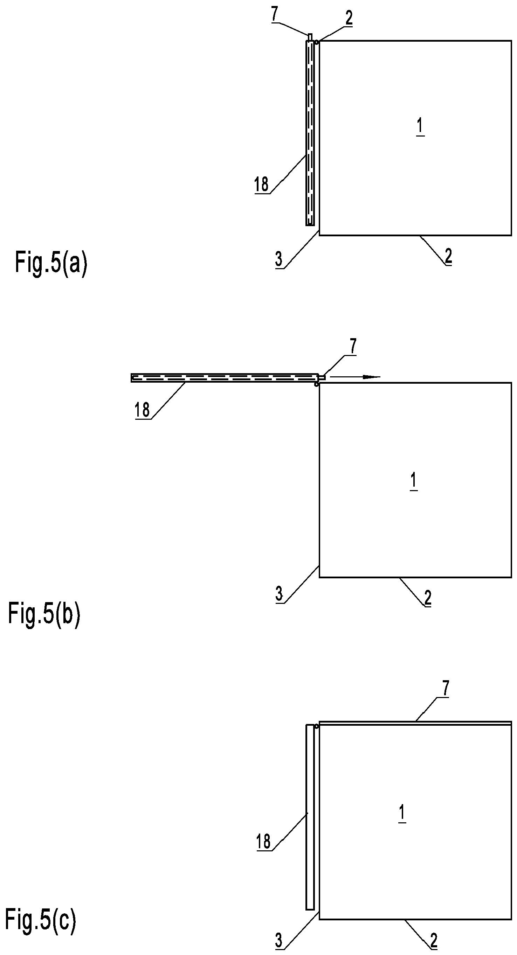

Fig. 5 zeigt eine schematische Darstellung eines Containers 1 mit einem Deckelaufnahmerahmen 18 und einem im Deckelaufnahmerahmen 18 herausschiebbar aufgenommenen Deckel 7. Der Deckelaufnahmerahmen 18 ist entlang einer seitlichen Containerwand 3 angeordnet und über ein Scharnier 19 gelenkig mit dem oberen Rand der seitlichen Containerwand 3 verbunden. Im offenen Zustand des Containers 1 ist der Deckel 7 im Deckelaufnahmerahmen 18 aufgenommen (Fig. 5(a)). Um den Container 1 zu schliessen, wird der Deckelaufnahmerahmen 18 inklusive Deckel 7 in eine horizontale Lage gebracht und der Deckel 7 kann aus dem Deckelaufnahmerahmen 18 über die oberen Containeröffnung geschoben oder gezogen werden (Fig. 5(b), Pfeil), wo er mit Befestigungsmittel am Container 1 befestigt wird. Anschliessend wird der leere Deckelaufnahmerahmen 18 wieder in die vertikale Lage gebracht (Fig. 5(c)).

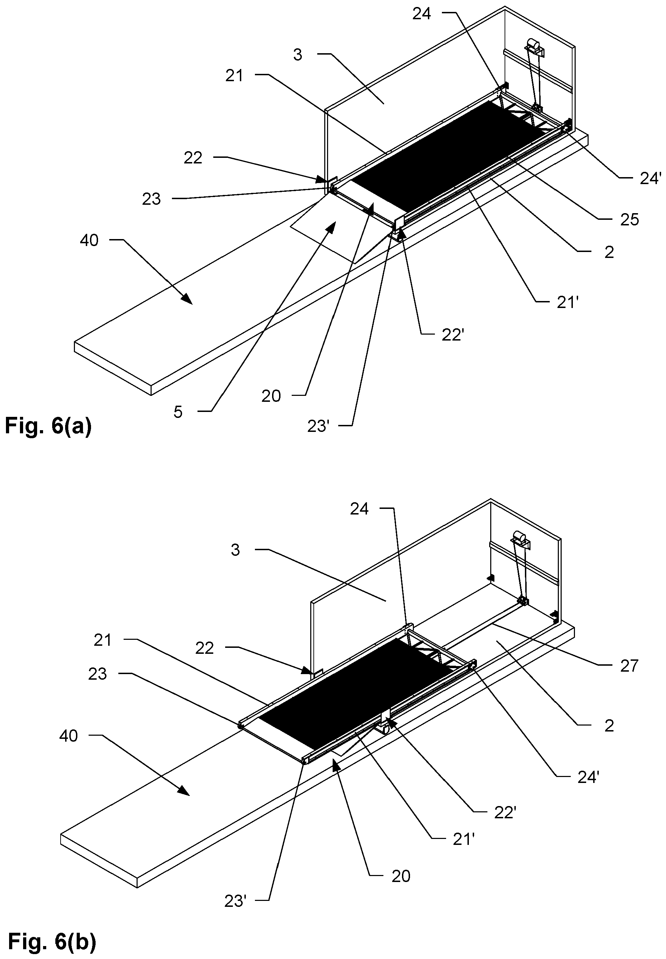

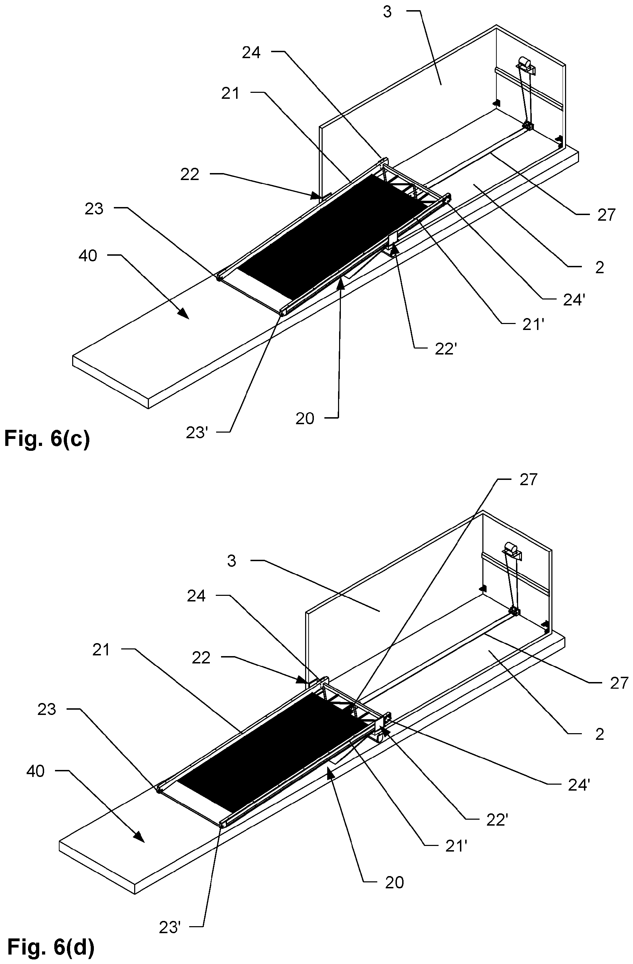

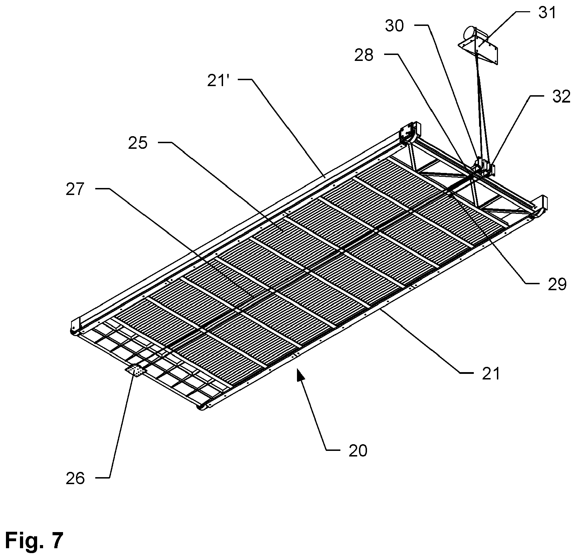

Fig. 6 zeigt unter (a) bis (d) einen Container mit Schiebeplattform 20 in unterschiedlichen Positionen, wobei eine seitliche Containerwand nicht dargestellt ist. Fig. 7 zeigt die Schiebeplattform 20 und den Seilzug von unten.

Die Schiebeplattform 20 weist zwei seitliche Führungsträger 21, 21' auf mit welcher sie auf an den seitlichen Containerwänden 3, 3' befestigen Rollen 22, 22' gelagert und geführt ist. Diese an den seitlichen Containerwänden 3, 3' befestigte Rollen 22, 22' sind im Bereich der Containertüre 5 (nicht dargestellt) angeordnet und derart ausgestaltet, dass die Schiebeplattform 20 beim Ausfahren um den Drehpunkt der Rollen 22, 22' kippen kann. Am vorderen Ende weist die Schiebeplattform 20 vordere Rollen 23, 23' auf, auf welchen die Schiebeplattform 20 im ausgefahrenen Zustand auf einem Untergrund 40 gelagert ist. Am hinteren Ende weist die Schiebeplattform hintere Rollen 24, 24' auf, auf welchen die Schiebeplattform 20 im eingefahrenen Zustand auf dem Containerboden 2 gelagert ist.

Die Schiebeplattform 20 wird in der gezeigten Ausführung mittels eines Seilzugs aus- resp. eingefahren. Dazu ist am Containerboden 2 im Bereich der Containertüre 5 eine vordere Umlenkrolle 26 angeordnet, wie in Fig. 6(d) erkennbar. Ein erstes Ende eines Zugseils 27 ist an einer ersten Zugseilverankerung 28 befestigt, welche am hinteren Ende der Plattform angeordnet ist. Das Zugseil 27 läuft von der ersten Zugseilverankerung nach vorne um die vordere Umlenkrolle 26 und zurück über ein erste hintere Umlenkrolle 30 an der Containerrückwand zu einer Seilwinde 31, die ebenfalls an der Container Rückwand angebracht ist. Einziehen des ersten Endes des Zugseils führt zu einem Herausfahren der Schiebeplattform 20. Ein zweites Ende des Zugseils 27 ist an einer zweiten Zugseilverankerung 29 befestigt, welche ebenfalls am hinteren Ende der Schiebeplattform 20 angeordnet ist. Das Zugseil läuft von der zweiten Zugseilverankerung 29 über eine zweite hintere Umlenkrolle 32 an der Containerrückwand zur Seilwinde 31. Einziehen des zweiten Endes des Zugseils 27 führt zu einem Einfahren der Schiebeplattform 20.

Weiter weist die Schiebeplattform einen Gitterrost als Plattformboden 25 auf.

### Bezeichnungsliste

- 1: Container
- 2: Containerboden
- 3, 3': seitliche Containerwände
- 4: vordere stirnseitige Containerwand
- 5: stirnseitige Containerwand, Containertür
- 6: Innenraum
- 7, 7': Stahldeckel
- 8: Explosionsklappe
- 9: Seilwinde
- 10: Zugseil
- 11: bodennahe Umlenkung, Umlenkrolle
- 12: obere Umlenkung, Umlenkrolle
- 13: Rohrleitungen der Sprinkleranlage
- 14, 14': Einlassöffnung
- 15, 15': Auslassöffnung
- 16: Rampe
- 17: Traverse
- 18: Deckelaufnahmerahmen
- 19: Scharnier
- 20: Schiebeplattform
- 21, 21': Führungsträger
- 22, 22': Rollen an Containerwand
- 23, 23': vordere Rollen
- 24, 24': hintere Rollen
- 25: Plattformboden
- 26: vordere Umlenkrolle
- 27: Zugseil
- 28: erste Zugseilverankerung
- 29: zweite Zugseilverankerung
- 30: erste hintere Umlenkrolle
- 31: Seilwinde
- 32: zweite hintere Umlenkrolle
- 40: Untergrund

## Patentansprüche

1. Bergungseinrichtung zum Bergen eines brennenden Automobils, insbesondere Elektroautomobils, umfassend ein Transportfahrzeug und einen mit Löschwasser befüllbaren Container (1) mit einem Containerboden (2) und mehreren Containerwänden (3, 3', 4, 5), die einen Innenraum (6) zur Aufnahme des Automobils ausbilden, wobei eine stirnseitige Containerwand (5) als wasserdicht verschliessbare Tür (5) ausgebildet ist; **dadurch gekennzeichnet, dass** der Container (1) weiter einen aufklappbaren, eine obere Öffnung des Containers (1) fest verschliessbaren Stahldeckel (7, 7') aufweist.

2. Bergungseinrichtung nach Anspruch 1, **dadurch gekennzeichnet, dass** im Innenraum (6) ein Brandmelder und/oder Temperaturfühler angeordnet ist.

3. Bergungseinrichtung nach einem der vorangehenden Ansprüche, **dadurch gekennzeichnet, dass** die Bergungseinrichtung eine Trockenlöschanlage, vorzugsweise eine Aerosollöschanlage, aufweist, welche bei Auslösung den Innenraum mit Löschfluid flutet.

4. Bergungseinrichtung nach einem der vorangehenden Ansprüche, **dadurch gekennzeichnet, dass** die Bergungseinrichtung Mittel zum Einladen (9, 10) des Automobils in den Innenraum (6) des Containers (1) umfasst.

5. Bergungseinrichtung nach Anspruch 4, **dadurch gekennzeichnet, dass** das Mittel zum Einladen ein Zugseil (10) umfasst, welches über eine erste Umlenkung (11) geführt ist, die im Innenraum (6) an der der Tür gegenüberliegenden Stirnwand (4) in Bodennähe angeordnet ist, so dass das Automobil durch die Türöffnung in den Innenraum (6) des Containers (1) ziehbar ist.

6. Bergungseinrichtung nach Anspruch 5, **dadurch gekennzeichnet, dass** das Zugseil weiter über eine obere Umlenkung (12) geführt ist, die bei offenem Stahldeckel (7,7') auf der oberen Stirnkante der Stirnwand (4) aufsetzbar ist.

7. Bergungseinrichtung nach einem der Ansprüche 4 bis 6, **dadurch gekennzeichnet, dass** das Mittel zum Einladen eine mit dem Zugseil (10) verbundene Seilwinde (9) umfasst, die ausserhalb des Innenraums (6) des Containers (1) am Container, vorzugsweise an der der Tür (5) gegenüberliegenden Stirnwand (4) des Containers (1), oder an dem den Container (1) transportierenden Transportfahrzeug befestigt ist.

8. Bergungseinrichtung nach Anspruch 4, **dadurch gekennzeichnet, dass** das Mittel zum Einladen eine im Innenraum angeordnete Schiebeplattform umfasst.

9. Bergungseinrichtung nach einem der vorangehenden Ansprüche, **dadurch gekennzeichnet, dass** der Container (1) mindestens eine in einer Containerwand (4) angeordnete Einlassöffnung (14, 14') für Löschwasser aufweist und/oder mindestens eine im unteren Bereich der Seitenwände (3, 3') und/oder der Stirnwand (4) angeordneten verschliessbare Auslassöffnung (15, 15') für das Löschwasser aufweist.

10. Bergungseinrichtung nach einem der vorangehenden Ansprüche, **dadurch gekennzeichnet, dass** der Container (1) eine Sprinkleranlage aufweist, die mehrere Rohrleitungen (13) umfasst, welche im oberen Bereich der Containerwände (3, 3', 4) und/oder im Bereich des Containerbodens (2) angeordnet sind.

11. Bergungseinrichtung nach einem der vorangehenden Ansprüche, **dadurch gekennzeichnet, dass** die Bergungseinrichtung weiter eine im Türöffnungsbereich des Containers angeordnete oder anbringbare Rampe (16) umfasst.

12. Bergungseinrichtung nach einem der vorangehenden Ansprüche, **dadurch gekennzeichnet, dass** der Container (1) eine demontierbare, obere Traverse (17), insbesondere eine Hecktraverse und eine Mitteltraverse, umfasst.

13. Bergungseinrichtung nach einem der vorangehenden Ansprüche, **dadurch gekennzeichnet, dass** der Container (1) als Abrollcontainer ausgebildet ist.

14. Bergungseinrichtung nach einem der Ansprüche 1 bis 9, **dadurch gekennzeichnet, dass** der Container (1) auf einem Lastwagen oder einem Lastwagenanhänger montiert ist.

15. Verfahren zum Bergen eines verunfallten Automobils mit einer Bergungseinrichtung nach einem der vorangehenden Ansprüche, umfassend die Schritte: (a) Bereitstellen des Containers; (b) Beladen des Containers mit dem verunfallten Automobil; und (c) Abtransport des verunfallten Automobils unmittelbar nach der Beladung.
